# EUROPÄISCHE PATENTSCHRIFT

(11) **EP 3 022 086 B1**
(45) Veröffentlichungstag und Bekanntmachung des Hinweises auf die Patenterteilung: **21.02.2018**
(21) Anmeldenummer: 14738510.8
(22) Anmeldetag: 11.07.2014
(51) Int. Cl.: B60N 2/72, B23K 26/244, B60N 2/64, B60N 2/68

(54) **RÜCKENLEHNENSTRUKTUR FÜR EINEN FAHRZEUGSITZ UND FAHRZEUGSITZ**
BACKREST STRUCTURE FOR A VEHICLE SEAT, AND VEHICLE SEAT
STRUCTURE DE DOSSIER DE SIÈGE DE VÉHICULE ET SIÈGE DE VÉHICULE

(30) Priorität: 17.07.2013 DE 102013213995
(43) Veröffentlichungstag der Anmeldung: 25.05.2016
(73) Patentinhaber: Adient Luxembourg Holding S.à r.l., 2453 Luxembourg (LU)
(72) Erfinder: PLUTA, Wolfgang, 67699 Heiligenmoschel (DE); HAMMANN, Heinrich, 67806 Teschenmoschel (DE); DILL, Thomas, 67699 Heiligenmoschel (DE); WOLF, Christian, 67806 Katzenbach (DE)
(74) Vertreter: Liedhegener, Ralf
(86) Internationale Anmeldenummer: PCT/EP2014/064895
(87) Internationale Veröffentlichungsnummer: WO 2015/007631

(56) Entgegenhaltungen:
- EP-A2- 1 251 063
- WO-A1-2012/022473
- DE-A1- 19 835 992
- DE-A1-102009 031 581

## Beschreibung

Die Erfindung betrifft eine Rückenlehnenstruktur für einen Fahrzeugsitz mit den Merkmalen des Oberbegriffs des Anspruchs 1 sowie einen Fahrzeugsitz mit den Merkmalen des Anspruchs 13.

### Stand der Technik

Aus der DE 10 2005 005 485 A1 ist eine Rückenlehnenstruktur für eine Rückenlehne eines Fahrzeugsitzes bekannt, mit mindestens einem Grundblech, und einem Lehnenrahmen bestehend aus einem linken und einem rechten, vertikal verlaufenden, seitlichen Hutprofil, und einem oberen und einem unteren, in Querrichtung verlaufenden Hutprofil. Die Hutprofile sind auf die Vorderseite des Grundblechs aufgeschweißt. Die seitlichen Hutprofile sind mit den in Querrichtung verlaufenden Hutprofilen verschweißt.

Aus der DE 10 2006 000 850 B4 ist eine Rückenlehnenstruktur mit einem einstückig ausgebildeten, annähernd umlaufenden Rahmen bekannt. Der Rahmen erstreckt sich an drei Randbereichen des Grundblechs und umfasst zwei parallel verlaufende Längsabschnitte und einen die Längsabschnitte verbindenden Querabschnitt. Zur Erhöhung der Steifigkeit weist das Grundblech Verstärkungssicken auf. Zur Fixierung und Befestigung eines Polsters sind Polstereinhängkanäle an den außen liegenden Randbereichen des Grundblechs vorgesehen.

Aus der DE 10 2010 054 185 A1 ist eine Rückenlehne mit einem mehrteilig ausgebildeten Rahmen bekannt. Der Rahmen umfasst zwei parallel verlaufende Längsholme, welche sich entlang der seitlichen Randbereiche des Grundblechs erstrecken. Entlang des oberen Randbereichs ist ein Querholm angeordnet. Zur Versteifung des Grundblechs sind sickenartige Kanäle eingeprägt.

Die DE 10 2005 001 606 B4 offenbart eine Rückenlehnenstruktur mit einem einteilig ausgebildeten Rahmenblech, welches sich über einen Großteil der Fläche des Grundblechs erstreckt. Das Rahmenblech und das Grundblech sind mittels Laserschweißens miteinander verbunden. Dabei durchdringt ein Laserstrahl das Grundblech und die Oberfläche des Rahmenblechs, wodurch eine Schweißnaht erzeugt wird, welche das Grundblech mit dem Rahmenblech verschweißt.

Aus der DE 35 15 598 C2 ist eine Schweißverbindung zweier ein Innen- und ein Außenblech bildender Dünnbleche, beispielsweise Innen- und Außenblech für Türen, Klappen bei Kraftfahrzeugen bekannt, wobei das Außenblech (2) eine optisch glatte Außenfläche bildet und in seinem Randbereich umgebördelt ist. Das Außenblech ist um 180° auf seine rückwärtige Fläche umgebördelt, das Innenblech mit einem Randbereich auf den umgebördelten Rand des Außenbleches gelegt. Die Verbindung zwischen diesem Blech und dem umgebördelten Rand erfolgt mittels Laserstrahl von der der Außenfläche abgewandten Seite.

Die DE 10 2009 031 581 A1 offenbart eine Beschlag-Adapter-Anordnung für einen Fahrzeugsitz, mit einem ersten Beschlagteil, mit einem relativ zum ersten Beschlagteil verstellbaren zweiten Beschlagteil und mit einem am ersten Beschlagteil fest angebrachten Adapter, wobei der Adapter eine Öffnung aufweist und mit dem ersten Beschlagteil verschweißt ist, und die Öffnung des Adapters von einem um diese Öffnung angeordneten, kreisringförmigen, umgebogenen Bereich umgeben ist, und das erste Beschlagteil und der Adapter miteinander verbunden sind.

Aus der WO 2012/022473 A1 ist ein Fahrzeuginnenausstattungsteil bekannt, mit einem Strukturelement, das eine Verstärkungsstruktur aufweist, wobei die Verstärkungsstruktur umgeformt, insbesondere gefaltet ist.

Die EP 1 251 063 A2 offenbart ein Verfahren zur Verbindung eines äußeren Metallblechs mit einem inneren Metallblech eines Karosseriebauteils, wie beispielsweise einer Fahrzeugtür oder Fahrzeughaube, wobei die Umfangsränder des äußeren Metallblechs und des inneren Metallblechs aneinander positioniert werden und mittels Laserschweißens miteinander verschweißt werden.

Die DE 198 35 992 A1 offenbart eine Laserschweißverbindung von zwei Blechbauteilen, von denen eines der beiden Blechbauteile im Bereich der Schweißverbindung abschnittsweise eine Umbördelung aufweist, so dass ein Dickensprung zwischen den zu verschweißenden Blechbauteilen gegeben ist. Ein daraus resultierender Spalt ist mittels einer Feinnaht abgedichtet.

Üblicherweise kommen bei der Herstellung von Rückenlehnenstrukturen Grundbleche mit einer Materialstärke von 0,6 mm und mehr zum Einsatz. Der Trend in der Fahrzeugsitzentwicklung geht in Richtung Leichtbau. Großblechteile, wie Grundbleche von Rückenlehnenstrukturen, haben einen sehr hohen Gewichtsanteil an der gesamten Rückenlehne. Durch die großen Flächen der Grundbleche ist viel Material vorhanden, woraus das hohe Gewicht resultiert. Da die Flächen der Blechteile nicht verkleinert werden können, kann man bei vorgegebenem Material, beispielsweise Stahlblech, nur die Blechstärke der Bleche verringern, um Gewicht zu sparen. So hat sich die Blechstärke von Großblechteilen in der Vergangenheit immer weiter reduziert. Unterhalb einer Blechstärke von etwa 0,6 mm ist eine Schweißbarkeit der Bleche jedoch nicht mehr einfach sichergestellt, da zu wenig Material vorhanden ist. Aufgrund der geringen Materialstärke besteht während des Schweißvorganges die Gefahr, dass der Laserstrahl ein Loch in das Grundblech brennt, wodurch dieses beschädigt wird und nicht mit dem Rahmen verschweißt ist. Adapter können nicht ohne weiteres an die dünnen Bleche angebracht werden. Die immer dünner werdenden Bleche bergen zudem ein erhöhtes Verletzungsrisiko beim Handling und der Weiterbearbeitung.

### Aufgabe

Der Erfindung liegt die Aufgabe zu Grunde, eine Rückenlehnenstruktur für einen Fahrzeugsitz mit einem verhältnismäßig dünnen Grundblech und dadurch verringertem Gewicht sowie einen Fahrzeugsitz mit verringertem Gewicht zu schaffen.

### Lösung

Diese Aufgabe wird erfindungsgemäß durch eine Rückenlehnenstruktur mit den Merkmalen des Anspruches 1 gelöst.

Vorteilhafte Ausgestaltungen, welche einzeln oder in Kombination miteinander eingesetzt werden können, sind Gegenstand der Unteransprüche.

Eine gattungsgemäße Rückenlehnenstruktur umfasst ein flächiges Grundblech und ein weiteres Strukturteil welche durch Laserschweißen mittels mindestens einer Schweißnaht miteinander verbunden sind. Unter dem Begriff flächig ist insbesondere weitgehend eben zu verstehen. Einzelne Geometrien wie Verstärkungssicken, bedingen jedoch ein Abweichen von einer absolut ebenen Form. Unter einer Schweißnaht sind auch Schweißnähte, deren Länge etwa der Breite entspricht, zu verstehen. Somit gehören auch Schweißpunkte zu den Schweißnähten.

Erfindungsgemäß ist vorgesehen, dass im Bereich der mindestens einen Schweißnaht mindestens eine Zunge des Grundblechs um 180° umgebogen und auf das übrige Grundblech gelegt ist, und dass die mindestens eine Schweißnaht die umgebogene Zunge, das übrige Grundblech und das weitere Strukturteil miteinander verbindet. Somit erstreckt sich die Schweißnaht über den umgebogenen Teilbereich, das übrige Grundblech und das weitere Strukturteil.

Durch die Umbiegung der mindestens einen Zunge des Grundblechs ergibt sich lokal eine verdoppelte Materialstärke des Grundblechs. Durch die verdoppelte Materialstärke ist eine Schweißnaht mittels Laserschweißens vereinfacht herstellbar. Die Gefahr, dass der Laserstrahl ein Loch in das Grundblech brennt, ist verringert. Auch ein eventuell zwischen dem Grundblech und der Zunge verbleibender Luftspalt beeinflusst den Laserschweißvorgang nicht oder nur unwesentlich. Somit kann ein verhältnismäßig dünnes Grundblech mit verringertem Gewicht eingesetzt werden, wodurch auch der Fahrzeugsitz ein verringertes Gewicht aufweist. Weiterhin sind die Produktionskosten verringert und dadurch ist die Wirtschaftlichkeit erhöht.

Gemäß einer vorteilhaften Weiterbildung der Erfindung ist die mindestens eine Zunge mehrfach um 180° gebogen und auf das übrige Grundblech gelegt. Dadurch ist die Materialstärke des Grundblechs nicht nur verdoppelt sondern vervielfacht. Durch die vervielfachte Materialstärke des Grundblechs ist eine Schweißnaht mittels Laserschweißens noch weiter vereinfacht herstellbar.

Eine vorteilhafte Gewichteinsparung ergibt sich, wenn das Grundblech eine Materialstärke von weniger als 0,5 mm aufweist. Vorzugsweise weist das Grundblech eine Materialstärke zwischen 0,3 mm und 0,5 mm, besonders vorzugsweise von etwa 0,35 mm auf. Diese Materialstärke bedingt eine vorteilhafte Gewichtseinsparung und ermöglicht trotzdem die sichere Herstellung einer Schweißnaht mittels Laserschweißen.

Gemäß einer bevorzugten Ausführungsform der Erfindung ist das weitere Strukturteil ein Lehnenrahmen.

Die Steifigkeit der Rückenlehnenstruktur lässt sich erhöhen, indem mehrere umgebogene Zungen entlang einer äußeren Kontur des Grundblechs angeordnet und mit dem Lehnenrahmen verschweißt sind. Die Abstände zwischen einzelnen Zungen können äquidistant sein. Die Abstände zwischen einzelnen Zungen können aber auch an die Belastung der Rückenlehnenstruktur angepasst sein.

Die umgebogene Zunge ist gemäß einer vorteilhaften Ausgestaltung eine rechteckförmige Zunge, welche an drei Seiten von dem übrigen Grundblech getrennt ist, und welche an der vierten, mit dem übrigen Grundblech verbundenen Seite um 180° umgebogen und auf das übrige Grundblech gelegt ist. Eine solche Zunge ist verhältnismäßig einfach durch eine Ausstanzung aus dem Grundblech an einer beliebigen Stelle erzeugbar.

Gemäß einer anderen vorteilhaften Ausgestaltung ist der umgebogene Teilbereich am Rand des Grundblechs befindliches, insbesondere zungenförmiges Randmaterial. Dadurch entfällt der Vorgang der Ausstanzung und es entsteht lokal ein verhältnismäßig großer Befestigungsbereich, welcher sich am Rand des Grundblechs befindet.

Das Grundblech kann mindestens eine von seiner äußeren Kontur nach innen beabstandete Befestigungsstelle aufweisen. Diese kann durch einen Befestigungsbereich im Bereich der äußeren Kontur des Grundblechs ergänzt sein. So lassen sich beispielsweise Lehnenrahmen, die als Hutprofil mit zwei parallel verlaufenden Befestigungsflanschen ausgestattet sind, auf dem Grundblech befestigen. Vorzugsweise umfassen die Befestigungsstellen jeweils einen Durchbruchbereich und eine Zunge.

Ist das Randmaterial einfach um 180° umgebogen, so entsteht eine flache Randkontur, welche keinen scharfkantigen, sondern einen abgerundeten Randbereich aufweist. Dadurch ist das Verletzungsrisiko bei der Herstellung einer Rückenlehnenstruktur vermindert.

Ist das Randmaterial mehrfach umgebogen, wobei das Randmaterial und das übrige Grundblech eine geometrische Form umschließen, so entsteht eine konturierte Randkontur. Die konturierte Randkontur vermindert ebenfalls das Verletzungsrisiko, da sie keinen scharfkantigen, sondern einen abgerundeten Randbereich aufweist. Zusätzlich erhöht die konturierte Randkontur die Steifigkeit des Grundblechs.

Gemäß einer vorteilhaften Weiterbildung der Erfindung weist der Lehnenrahmen einen Polstereinhängkanal zur Befestigung eines Polsters auf. Somit ist es nicht erforderlich, an dem Grundblech einen Polstereinhängkanal vorzusehen, und somit braucht das Grundblech nicht die Belastung durch die Spannung des Polsters aufzunehmen und damit kann ein Grundblech mit verhältnismäßig dünner Materialstärke eingesetzt werden.

Gemäß einer anderen Weiterbildung der Erfindung weist das Grundblech zusätzlich einen Polstereinhängebereich auf, welcher vorzugsweise formschlüssig in dem Polstereinhängkanal des Lehnenrahmens integriert ist. Dadurch ist die Steifigkeit des Polstereinhängkanals erhöht.

Die Steifigkeit des Polstereinhängkanals ist noch weiter erhöht, wenn das Grundblech im Bereich des Polstereinhängebereichs gedoppelt ist.

Die Steifigkeit des Grundblechs lässt sich durch mindestens eine Verstärkungssicke erhöhen. Vorzugsweise ist das Grundblech aus Stahlblech oder Aluminiumblech gefertigt.

Gemäß einer weiteren bevorzugten Ausführungsform der Erfindung ist das weitere Strukturteil ein Draht, insbesondere ein Toptetherbügel eines Kindersitzbefestigungssystems Isofix.

Die Aufgabe wird auch durch einen Fahrzeugsitz gelöst, welcher mindestens eine erfindungsgemäße Rückenlehnenstruktur umfasst.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische, teilweise geschnittene Ansicht eines Fahrzeugsitzes,
- Fig. 2:: eine perspektivische Ansicht einer Rückenlehnenstruktur des Fahrzeugsitzes nach Fig. 1 gemäß eines ersten Ausführungsbeispiels,
- Fig. 3:: ein Grundblech der Rückenlehnenstruktur nach Fig. 2,
- Fig. 4:: eine vergrößerte Darstellung des markierten Teilbereichs des Grundblechs nach Fig. 3,
- Fig. 5:: einen Schnitt entlang der Linie A - A aus Fig. 4, wobei zusätzlich ein Teils des Rahmens dargestellt ist,
- Fig. 6:: eine Ansicht einer Rückenlehnenstruktur des Fahrzeugsitzes nach Fig. 1 gemäß eines zweiten Ausführungsbeispiels, in Fahrtrichtung gesehen,
- Fig. 7:: einen Schnitt entlang der Linie B - B aus Fig. 6,
- Fig. 8:: einen Schnitt durch einen Befestigungsbereich eines Grundblechs gemäß einer ersten Ausführungsform des zweiten Ausführungsbeispiels,
- Fig. 9:: einen Schnitt durch einen Befestigungsbereich eines Grundblechs gemäß einer zweiten Ausführungsform des zweiten Ausführungsbeispiels,
- Fig. 10:: eine perspektivische Ansicht einer Rückenlehnenstruktur des Fahrzeugsitzes nach Fig. 1 gemäß einem dritten Ausführungsbeispiel mit einem Toptetherbügel und
- Fig. 11:: einen Schnitt entlang der Linie C - C aus Fig. 10.

Ein Fahrzeugsitz 1 für ein Kraftfahrzeug, vorliegend ein Fondsitz, weist ein Sitzteil 3 und eine daran angebrachte, neigungseinstellbare Rückenlehne 4 auf. Bei dem Fahrzeugsitz 1 könnte es sich aber auch um einen Vordersitz handeln. Die Rückenlehne 4 umfasst einen Lehnenrahmen 40 sowie ein Grundblech 30, welches als flächiger Gegenstand ausgebildet ist. Der Lehnenrahmen 40 und das Grundblech 30 bilden gemeinsam eine Rückenlehnenstruktur, indem diese miteinander verschweißt sind, vorzugsweise mittels Laserschweißens.

Das Grundblech 30 weist vorliegend eine Materialstärke von etwa 0,35 mm auf. Das Grundblech 30 enthält vorliegend Versteifungsrippen sowie Verstärkungssicken 31 und ist trotzdem als flächig anzusehen. Der Lehnenrahmen 40 weist vorliegend eine Materialstärke von etwa 1,5 mm auf. Auch andere Materialstärken des Lehnenrahmens 40 sind denkbar, insbesondere zwischen 0,8 mm und 4 mm.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet. Die Vertikalrichtung schließt auch einen Winkelbereich relativ zu der senkrecht zum Erdboden orientierten Richtung ein, in welchem sich die Rückenlehne 4 in gewöhnlicher Gebrauchsposition befindet.

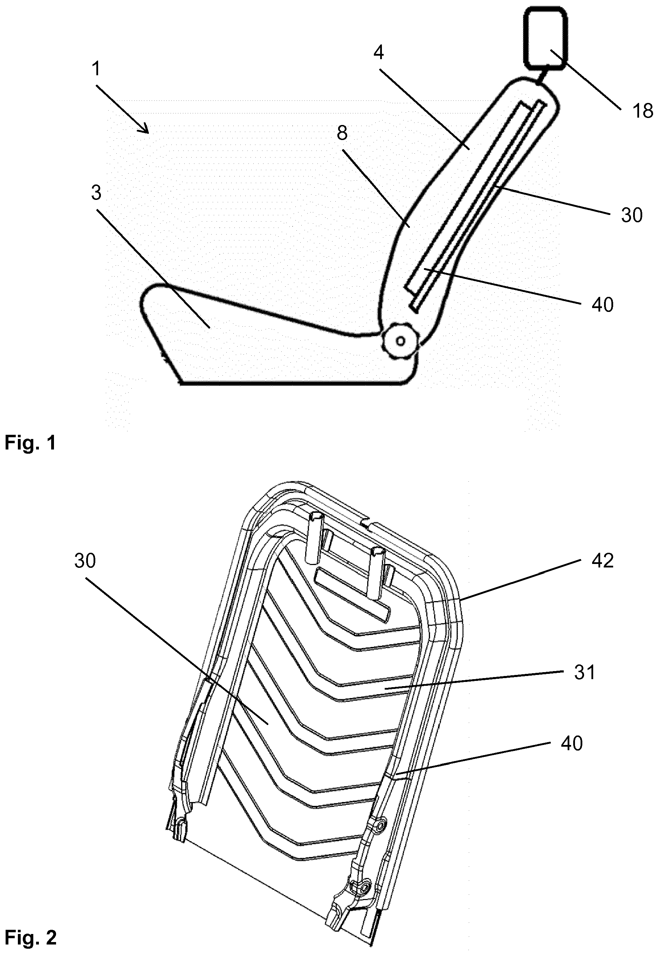

In der Darstellung nach Fig. 1 befindet sich die Rückenlehne 4 in ihrer Gebrauchsposition und erstreckt sich somit weitgehend in Vertikalrichtung. Die Rückenlehne 4 umfasst ein Polster 8, welches in Fahrtrichtung vorne auf der Rückenlehnenstruktur, insbesondere dem Grundblech 30, aufliegt und mit einem nicht dargestellten Bezug überzogen ist. An dem in Vertikalrichtung oberen Ende der Rückenlehne 4, welches dem Sitzteil 3 abgewandt ist, ist ferner eine höheneinstellbare und neigungseinstellbare Kopfstütze 18 angebracht.

Gemäß eines ersten Ausführungsbeispiels, welches in Fig. 2 dargestellt ist, umfasst die Rückenlehnenstruktur ein Grundblech 30 sowie einen teilweise umlaufenden Lehnenrahmen 40, welcher das Grundblech 30 an drei Seiten umschließt.

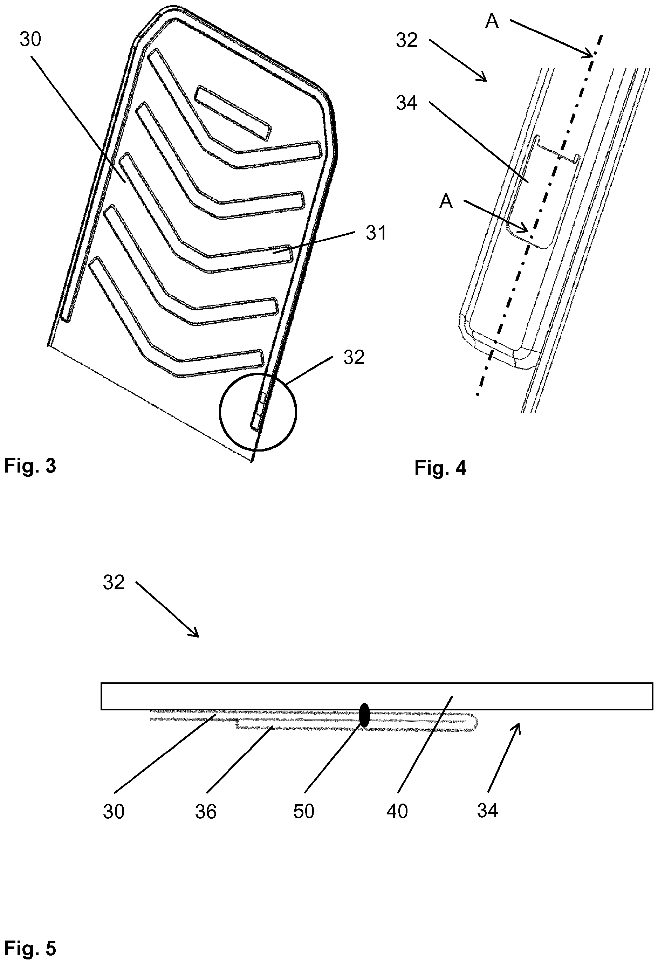

Nahe seines Randbereichs weist das Grundblech 30 mehrere Befestigungsstellen 32 auf, von denen in der vereinachten Darstellung der Fig. 3 nur eine gezeigt ist. Vorzugsweise sind mehrere Befestigungsstellen 32 in definierten Abständen zueinander entlang der drei Seiten, an denen der Lehnenrahmen 40 verläuft, angeordnet. Die Abstände können äquidistant sein.

In Fig. 4 ist eine der besagten Befestigungsstellen 32 vergrößert dargestellt. Die Befestigungsstelle 32 umfasst einen annähernd rechteckförmigen Durchbruchbereich 34. Der Durchbruchbereich 34 entsteht durch eine Ausstanzung aus dem Grundblech 30 mit einem U-förmigen Querschnitt. Dabei entsteht eine Zunge 36, welche an drei Seiten von dem übrigen Grundblech 30 getrennt ist und an ihrer vierten Seite mit dem Grundblech 30 verbunden ist. Die Zunge 36 wird dann entlang der vierten Seite um etwa 180° umgebogen und auf das übrige Grundblech 30 gelegt. Das Grundblech 30 wird also an der Befestigungsstelle 32 einmal gefaltet, wodurch die Materialstärke verdoppelt wird. Auf die der Zunge 36 gegenüberliegende Seite des Grundblechs 30 wird dann der Lehnenrahmen 40 aufgesetzt und verschweißt.

Die Zunge 36 ist vorliegend rechteckförmig, kann jedoch in Abwandlungen des Ausführungsbeispiels beispielsweise auch trapezförmig, halbkreisförmig oder polygon geformt sein. Die Form der zugehörigen Durchbruchbereiche ist dann entsprechend der Zungenform ausgebildet.

Mittels Laserschweißens wird das Grundblech 30 mit dem Lehnenrahmen 40 verbunden. Dabei dringt die Energie des Laserstrahls durch die Zunge 36 und das übrige Grundblech 30 hindurch und dringt in den Lehnenrahmen 40 ein. Dabei entsteht in den Kontaktstellen des übrigen Grundblechs 30 mit dem Lehnenrahmen 40 eine Schweißnaht 50, welche sich einerseits in den Lehnenrahmen 40 hinein und andererseits durch das übrige Grundblech 30 hindurch bis in die Zunge 36 hinein ausdehnt.

Eine solche Schweißnaht 50, welche das Grundblech 30 mit dem Lehnenrahmen 40 verbindet und sich dabei über drei Materialschichten erstreckt, ist in Fig. 5 dargestellt.

Zur Befestigung des Polsters 8 an der Rückenlehnenstruktur weist der Lehnenrahmen 40 einen Polstereinhängkanal 42 auf. Der Polstereinhängkanal 42 umschließt dabei den Lehnenrahmen 40 an drei Seiten. Der Polstereinhängkanal 42 weist, ebenso wie der übrige Lehnenrahmen 40, vorliegend eine Materialstärke von etwa 1,5 mm auf und ist damit steifer und fester ausgeführt, als wenn er Teil des verhältnismäßig dünnen Grundblechs 30 wäre.

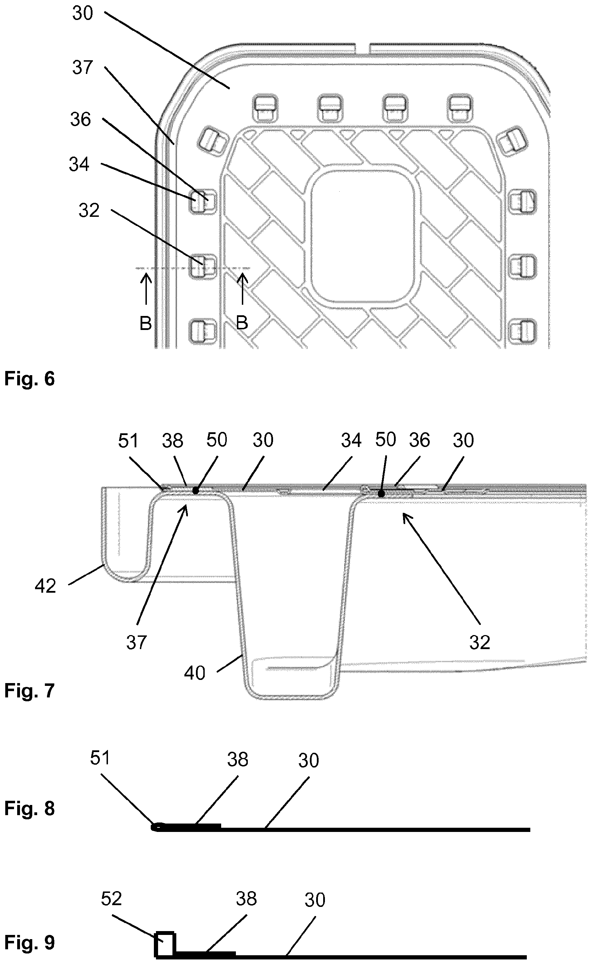

Gemäß einem zweiten Ausführungsbeispiel, welches in Fig. 6 dargestellt ist, umfasst die Rückenlehnenstruktur ebenfalls ein Grundblech 30 sowie einen teilweise umlaufenden Lehnenrahmen 40, welcher das Grundblech 30 an drei Seiten umschließt und mit dem Grundblech 30 verschweißt ist.

Das Grundblech 30 weist, ähnlich wie im ersten Ausführungsbeispiel, mehrere Befestigungsstellen 32 mit Durchbruchbereichen 34 und Zungen 36 auf. Das Grundblech 30 ist, ähnlich wie im ersten Ausführungsbeispiel, mittels Schweißnähten 50, welche sich jeweils von der Zunge 36 durch das Grundblech 30 hindurch bis in den Lehnenrahmen 40 hinein erstrecken, an Befestigungsstellen 32 mit dem Lehnenrahmen 40 verbunden.

Zusätzlich sind an den Randbereichen des Grundblechs 30 Befestigungsbereiche 37 vorgesehen. An jedem Befestigungsbereich 37 ist am Rand des Grundblechs 30 befindliches, vorzugsweise als Zungen ausgebildetes, Randmaterial 38 um etwa 180° umgebogen und auf das übrige Grundblech 30 gelegt. Eine Zunge des Grundblechs 30 wird also an dem Befestigungsbereich 37 einmal gefaltet, wodurch die Materialstärke verdoppelt wird. Auf die dem Randmaterial 38 gegenüberliegende Seite des Grundblechs 30 wird dann der Lehnenrahmen 40 aufgesetzt.

Das Grundblech 30 ist auch an den Befestigungsbereichen 37, ähnlich wie an den Befestigungsstellen 32, mittels Schweißnähten 50, welche sich jeweils von dem Randmaterial 38 durch das Grundblech 30 hindurch bis in den Lehnenrahmen 40 hinein erstrecken, mit dem Lehnenrahmen 40 verbunden. In Fig. 7 ist ein Schnitt durch die Rückenlehnenstruktur mit einer Befestigungsstelle 32 und einem Befestigungsbereich 37 dargestellt.

Gemäß einer ersten Ausführungsform des zweiten Ausführungsbeispiels ist das zungenförmige Randmaterial 38, wie in Fig. 7 und Fig. 8 dargestellt, einfach um 180° umgebogen und flach auf das übrige Grundblech 30 gelegt. Dabei entsteht eine verhältnismäßig flache erste Randkontur 51, welche verhältnismäßig einfach herstellbar ist.

Gemäß einer zweiten Ausführungsform des zweiten Ausführungsbeispiels ist das zungenförmige Randmaterial 38, wie in Fig. 9 dargestellt, mehrfach umgebogen und anschließend flach auf das übrige Grundblech 30 gelegt. Dabei umschließen das Randmaterial 38 und das übrige Grundblech 30 eine geometrische Form, vorliegend ein Rechteck. Dabei entsteht, gegebenenfalls abschnittweise, eine konturierte zweite Randkontur 52, welche die Steifigkeit des Grundblechs 30 erhöht. Vorzugsweise ist an mehreren Stellen einer jeden Seite des Grundblechs 30 zungenförmiges Randmaterial 38 umgebogen.

Beide Randkonturen 51, 52 bieten den Vorteil, dass scharfkantige Randbereiche des Grundblechs 30 vermieden sind. Dadurch sinkt das Verletzungsrisiko beim Verarbeiten der Grundbleche 30 während der Herstellung von Rückenlehnenstrukturen.

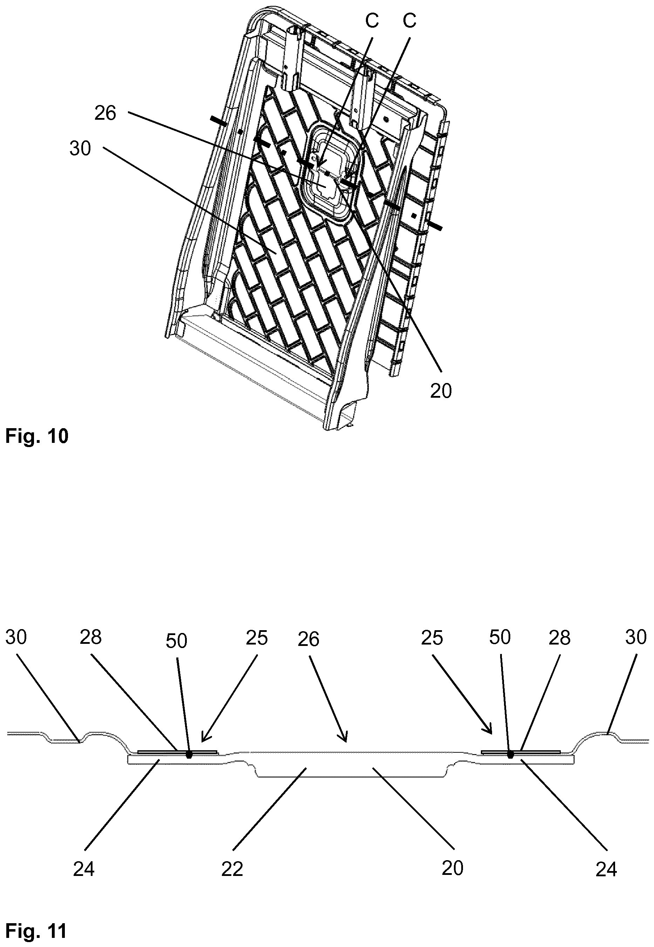

Gemäß einem dritten Ausführungsbeispiel, welches in Fig. 10 und Fig. 11 dargestellt ist, umfasst die Rückenlehnenstruktur ein Grundblech 30, an welchem ein Toptetherbügel 20 befestigt ist. Der Toptetherbügel 20 umfasst dabei einen zentralen Abschnitt 22, welcher einen annähernd kreiszylindrischen Querschnitt aufweist. Beidseitig des zentralen Abschnitts 22 ist je ein flächig ausgebildeter Befestigungsabschnitt 24 vorgesehen.

Der Toptetherbügel 20 ist aus einem starren, runden Draht hergestellt, wobei die Befestigungsabschnitte 24 durch entsprechendes Pressen oder Walzen des Drahts hergestellt sind. Der Toptetherbügel 20 übergreift eine Öffnung 26 in dem Grundblech 30. Dabei liegen die Befestigungsabschnitte 24 auf je einem Kontaktbereich 25 des Grundblechs 30 auf und der zentrale Abschnitt 22 überbrückt die Öffnung 26.

Die Kontaktbereiche 25 des Grundblechs 30 entstehen, ähnlich wie die Befestigungsstellen 32 und die Befestigungsbereiche 37, durch Umbiegen von als Laschen ausgebildeten Zungen 28 um etwa 180°, wobei die Zungen 28 auf das übrige Grundblech 30 gelegt werden. Das Grundblech 30 wird also auch an den Kontaktbereichen 25 einmal gefaltet, wodurch die Materialstärke verdoppelt wird. Auf die den Zungen 28 gegenüberliegende Seite des Grundblechs 30 werden dann die Befestigungsabschnitte 24 des Toptetherbügel 20 aufgesetzt.

Das Grundblech 30 ist somit an den Kontaktbereichen 25, ähnlich wie an den beschriebenen Befestigungsstellen 32 oder den Befestigungsbereichen 37, mittels Schweißnähten 50, welche sich jeweils von der Zunge 28 durch das Grundblech 30 hindurch bis in den Befestigungsabschnitt 24 des Toptetherbügel 20 hinein erstrecken, mit dem Toptetherbügel 20 verbunden. In Fig. 11 ist ein Schnitt durch die Rückenlehnenstruktur mit einem Toptetherbügel 20 dargestellt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 4: Rückenlehne
- 8: Polster
- 18: Kopfstütze
- 20: Toptetherbügel
- 22: zentraler Abschnitt
- 24: Befestigungsabschnitt
- 25: Kontaktbereich
- 26: Öffnung
- 28: Lasche, Zunge
- 30: Grundblech
- 31: Verstärkungssicke
- 32: Befestigungsstelle
- 34: Durchbruchbereich
- 36: Zunge
- 37: Befestigungsbereich
- 38: Randmaterial, Zunge
- 40: Lehnenrahmen
- 42: Polstereinhängkanal
- 50: Schweißnaht
- 51: erste Randkontur
- 52: zweite Randkontur

## Patentansprüche

1. Rückenlehnenstruktur für einen Fahrzeugsitz (1), umfassend ein flächiges Grundblech (30) und ein weiteres Strukturteil (20, 40), wobei das weitere Strukturteil ein Lehnenrahmen (40) ist, welche durch Laserschweißen mittels mindestens einer Schweißnaht (50) miteinander verbunden sind, **dadurch gekennzeichnet, dass**
im Bereich der mindestens einen Schweißnaht (50) mindestens eine Zunge (28, 36, 38) des Grundblechs (30) um 180° umgebogen und auf das übrige Grundblech (30) gelegt ist, und dass die mindestens eine Schweißnaht (50) die umgebogene Zunge (28, 36, 38), das übrige Grundblech (30) und das weitere Strukturteil (20, 40) miteinander verbindet.

2. Rückenlehnenstruktur nach Anspruch 1, **dadurch gekennzeichnet, dass** das Grundblech (30) eine Materialstärke von weniger als 0,5 mm, vorzugsweise zwischen 0,3 mm und 0,5 mm, aufweist.

3. Rückenlehnenstruktur nach einem der vorhergehenden Ansprüche, **dadurch gekennzeichnet, dass** mehrere umgebogene Zungen (36, 38) entlang einer äußeren Kontur des Grundblechs (30) angeordnet sind.

4. Rückenlehnenstruktur nach einem der vorhergehenden Ansprüche, **dadurch gekennzeichnet, dass** das Grundblech (30) mindestens eine von seiner äußeren Kontur beabstandete Befestigungsstelle (32) aufweist.

5. Rückenlehnenstruktur nach Anspruch 4, **dadurch gekennzeichnet, dass** die Befestigungsstelle (32) einen Durchbruchbereich (34) und eine Zunge (36) umfasst.

6. Rückenlehnenstruktur nach einem der vorhergehenden Ansprüche, **dadurch gekennzeichnet, dass** die umgebogene Zunge (28, 36, 38) eine rechteckförmige Zunge (36) ist, welche an drei Seiten von dem übrigen Grundblech (30) getrennt ist, und welche an der vierten, mit dem übrigen Grundblech (30) verbundenen Seite um 180° umgebogen und auf das übrige Grundblech (30) gelegt ist.

7. Rückenlehnenstruktur nach einem der vorhergehenden Ansprüche, **dadurch gekennzeichnet, dass** die umgebogene Zunge (28, 36, 38) aus am Rand des Grundblechs (30) befindlichem Randmaterial (38) besteht.

8. Rückenlehnenstruktur nach Anspruch 7, **dadurch gekennzeichnet, dass** das Randmaterial (38) im Bereich der mindestens einen Zunge (28, 36, 38) einfach um 180° umgebogen ist, wodurch eine flache Randkontur (51) entsteht.

9. Rückenlehnenstruktur nach Anspruch 7, **dadurch gekennzeichnet, dass** das Randmaterial (38) mehrfach umgebogen ist, wobei das Randmaterial (38) und das übrige Grundblech (30) eine geometrische Form umschließen, wodurch eine konturierte Randkontur (52) entsteht.

10. Rückenlehnenstruktur nach einem der Ansprüche 1 bis 6, **dadurch gekennzeichnet, dass** der Lehnenrahmen (40) einen Polstereinhängekanal (42) zur Befestigung eines Polsters (8) aufweist.

11. Rückenlehnenstruktur nach einem der vorhergehenden Ansprüche, **dadurch gekennzeichnet, dass** das Grundblech (30) mindestens eine Verstärkungssicke (31) aufweist.

12. Rückenlehnenstruktur nach einem der vorhergehenden Ansprüche, **dadurch gekennzeichnet, dass** das Grundblech (30) aus Stahlblech oder Aluminiumblech gefertigt ist.

13. Fahrzeugsitz (1), umfassend mindestens eine Rückenlehnenstruktur nach einem der vorstehenden Ansprüche.

## Claims

1. Backrest structure for a vehicle seat (1), comprising
a planar base sheet (30) and an additional structural component (20, 40), the additional structural component being a backrest frame (40), which are connected to each other by means of laser welding using at least one weld seam (50),
**characterized in that**
in the region of the at least one weld seam (50) at least one tongue (28, 36, 38) of the base sheet (30) is bent through 180° and placed on the remaining base sheet (30), and **in that** the at least one weld seam (50) connects the bent tongue (28, 36, 38), the remaining base sheet (30) and the additional structural component (20, 40) to each other.

2. Backrest structure according to Claim 1, **characterized in that** the base sheet (30) has a material thickness of less than 0.5 mm, preferably between 0.3 mm and 0.5 mm.

3. Backrest structure according to either of the preceding claims, **characterized in that** a plurality of bent tongues (36, 38) are arranged along an outer contour of the base sheet (30).

4. Backrest structure according to one of the preceding claims, **characterized in that** the base sheet (30) has at least one securing location (32) which is spaced apart from the outer contour thereof.

5. Backrest structure according to Claim 4, **characterized in that** the securing location (32) comprises a passage region (34) and a tongue (36).

6. Backrest structure according to one of the preceding claims, **characterized in that** the bent tongue (28, 36, 38) is a rectangular tongue (36) which is separated at three sides from the remaining base sheet (30) and which is bent through 180° at the fourth side which is connected to the remaining base sheet (30) and placed on the remaining base sheet (30).

7. Backrest structure according to one of the preceding claims, **characterized in that** the bent tongue (28, 36, 38) comprises edge material (38) which is located at the edge of the base sheet (30).

8. Backrest structure according to Claim 7, **characterized in that** the edge material (38) in the region of the at least one tongue (28, 36, 38) is simply bent through 180°, whereby a flat edge contour (51) is produced.

9. Backrest structure according to Claim 7, **characterized in that** the edge material (38) is bent several times, wherein the edge material (38) and the remaining base sheet (30) enclose a geometric shape, whereby a contoured edge contour (52) is produced.

10. Backrest structure according to one of Claims 1 to 6, **characterized in that** the backrest frame (40) has an upholstery suspension channel (42) for securing a cushion (8).

11. Backrest structure according to one of the preceding claims, **characterized in that** the base sheet (30) has at least one reinforcement bead (31).

12. Backrest structure according to one of the preceding claims, **characterized in that** the base sheet (30) is produced from sheet steel or sheet aluminum.

13. Vehicle seat (1) comprising at least one backrest structure according to one of the preceding claims.

## Revendications

1. Structure de dossier pour un siège de véhicule (1), comprenant
une tôle de base plate (30) et une pièce structurale supplémentaire (20, 40), la pièce structurale supplémentaire étant un cadre de dossier (40), lesquelles sont connectées l'une à l'autre par soudage au laser au moyen d'au moins un cordon de soudure (50),
**caractérisée en ce que**
dans la région de l'au moins un cordon de soudure (50), au moins une langue (28, 36, 38) de la tôle de base (30) est recourbée de 180° et est placée sur le reste de la tôle de base (30), et **en ce que** l'au moins un cordon de soudure (50) relie les unes aux autres la langue recourbée (28, 36, 38), le reste de la tôle de base (30) et la pièce structurale supplémentaire (20, 40).

2. Structure de dossier selon la revendication 1, **caractérisée en ce que** la tôle de base (30) présente une épaisseur de matériau inférieure à 0,5 mm, de préférence comprise entre 0,3 mm et 0,5 mm.

3. Structure de dossier selon l'une quelconque des revendications précédentes, **caractérisée en ce que** plusieurs langues recourbées (36, 38) sont disposées le long d'un contour extérieur de la tôle de base (30).

4. Structure de dossier selon l'une quelconque des revendications précédentes, **caractérisée en ce que** la tôle de base (30) présente au moins une zone de fixation (32) espacée de son contour extérieur.

5. Structure de dossier selon la revendication 4, **caractérisée en ce que** la zone de fixation (32) comprend une région d'interruption (34) et une langue (36).

6. Structure de dossier selon l'une quelconque des revendications précédentes, **caractérisée en ce que** la langue recourbée (28, 36, 38) est une langue rectangulaire (36) qui est séparée au niveau de trois côtés du reste de la tôle de base (30), et qui est recourbée de 180° au niveau du quatrième côté connecté au reste de la tôle de base (30), et est placée sur le reste de la tôle de base (30).

7. Structure de dossier selon l'une quelconque des revendications précédentes, **caractérisée en ce que** la langue recourbée (28, 36, 38) se compose d'un matériau de bord (38) se trouvant sur le bord de la tôle de base (30).

8. Structure de dossier selon la revendication 7, **caractérisée en ce que** le matériau de bord (38) est recourbé une fois de 180° dans la région de l'au moins une langue (28, 36, 38), de manière à produire un contour de bord plat (51).

9. Structure de dossier selon la revendication 7, **caractérisée en ce que** le matériau de bord (38) est recourbé plusieurs fois, le matériau de bord (38) et le reste de la tôle de base (30) définissant une forme géométrique de manière à produire un contour de bord structuré (52).

10. Structure de dossier selon l'une quelconque des revendications 1 à 6, **caractérisée en ce que** le cadre de dossier (40) présente un canal d'accrochage de rembourrage (42) pour la fixation d'un rembourrage (8).

11. Structure de dossier selon l'une quelconque des revendications précédentes, **caractérisée en ce que** la tôle de base (30) présente au moins une moulure de renforcement (31).

12. Structure de dossier selon l'une quelconque des revendications précédentes, **caractérisée en ce que** la tôle de base (30) est fabriquée en tôle d'acier ou en tôle d'aluminium.

13. Siège de véhicule (1), comprenant au moins une structure de dossier selon l'une quelconque des revendications précédentes.
